# EUROPÄISCHE PATENTSCHRIFT

(11) **EP 1 966 871 B1**
(45) Veröffentlichungstag und Bekanntmachung des Hinweises auf die Patenterteilung: **05.11.2014**
(21) Anmeldenummer: 06841632.0
(22) Anmeldetag: 27.12.2006
(51) Int. Cl.: H02K 3/28

(54) **ELEKTRISCHE MASCHINE, INSBESONDERE WECHSELSTROMMASCHINE**
ELECTRICAL MACHINE, ESPECIALLY ALTERNATOR
MACHINE ELECTRIQUE, NOTAMMENT MACHINE A COURANT ALTERNATIF

(30) Priorität: 23.12.2005 DE 102005061892
(43) Veröffentlichungstag der Anmeldung: 10.09.2008
(73) Patentinhaber: Robert Bosch GmbH, 70442 Stuttgart (DE)
(72) Erfinder: WOLF, Gert, 71563 Affalterbach (DE); PFITZKE, Norbert, 71701 Schwieberdingen (DE)
(86) Internationale Anmeldenummer: PCT/EP2006/070225
(87) Internationale Veröffentlichungsnummer: WO 2007/074159

(56) Entgegenhaltungen:
- EP-A1- 0 454 039
- DE-A1- 10 209 054
- JP-A- 60 204 240
- US-A1- 2005 116 570

## Beschreibung

### Stand der Technik

Die Erfindung bezieht sich auf eine elektrische Maschine, insbesondere auf eine Wechselstrommaschine mit einer mehrphasigen Ständerwicklung nach der Gattung des Anspruchs 1.

Bei Wechselstromgeneratoren für Kraftfahrzeuge werden vorwiegend elektrische Maschinen mit einem durch Gleichstrom erregten Klauenpolläufer eingesetzt, um das Gleichstrom-Bordnetz des jeweiligen Kraftfahrzeugs auch im Leerlauf des Antriebsmotors ausreichend versorgen zu können. Neben zahlreichen anderen Anforderungen an den Generator ist auch das so genannte Magnetgeräusch des Generators zu dämpfen, welches insbesondere im unteren Drehzahlbereich der Maschine störend wahrnehmbar ist. Zur Unterdrückung der Magnetgeräusche ist es bekannt, an der Dreiphasen-Ständerwicklung des Generators die einzelnen Wicklungsstränge so aufzuteilen, dass sie zum Teil in die Nuten des benachbarten Wicklungsstranges eingesetzt werden. Durch diese Maßnahmen sinkt jedoch die Leistungsabgabe des Generators und es steigen die Verluste. Aufgrund der Welligkeit des abgegebenen Gleichstromes können außerdem in den Kabelsträngen der Fahrzeuge Schwingungsgeräusche in bestimmten Drehzahlbereichen des Antriebsmotors auftreten.

Es ist ferner bekannt, den Wechselstromgenerator mit einem Sechsphasen-System auszurüsten, um die Frequenz der Gleichrichtung zu verdoppeln und damit die Welligkeit des über eine Gleichrichter-Baueinheit einem Akkumulator des Kraftfahrzeug-Bordnetzes zugeführten Gleichstromes zu verringern. Dabei ist es aus der EP 0454 039 B1 (Figur 6) bekannt, die Ständerwicklung eines Wechselstromgenerators aus zwei Wicklungssystem mit je drei zueinander in einer Sternschaltung verbundenen Wicklungssträngen auszubilden. Die Wicklungsstränge sind in der Sternschaltung jeweils 120° elektrisch zueinander versetzt. Die zwei Wicklungssysteme sind zueinander um etwa 30° elektrisch versetzt. Die hierbei auftretenden Magnetgeräusche der Maschine sind jedoch insbesondere im unteren Drehzahlbereich unzureichend gedämpft. Nachteilig ist dabei ferner die immer noch große Spannungs- und Drehmomentenwelligkeit derartiger Maschinen, was insbesondere für leistungsstarke Maschinen sowohl im Generator - als auch im Motorbetrieb gilt.

Schließlich ist es aus der DE 102 09 054 A1 bekannt, zur Bedämpfung der Magnetgeräusche und zur Verringerung der Stromwelligkeit einer Kraftfahrzeug-Lichtmaschine eine siebenphasige Ständerwicklung zu verwenden und deren sieben in den Nuten eines Ständerblechpaketes nebeneinander liegenden Phasenstränge zu einem Stern zu verschalten oder zu einem Heptagon in Reihe zu schalten. Solche Lösungen haben zwar gegenüber sechsphasigen Systemen eine geringere Stromwelligkeit und geringere Magnetgeräusche; diese sind jedoch im unteren Drehzahlbereich noch immer unzureichend bedämpft. Außerdem ist dort der Anstieg der Leistungskennlinie der Maschine zu gering, da in Kraftfahrzeugen oftmals gerade im Leerlaufbereich der Brennkraftmaschine ein hoher Leistungsbedarf im Bordnetz besteht.

Aus der US 2005/0116570 A1 ist eine siebenphasige elektrische Maschine bekannt.

### Vorteile der Erfindung

Die erfindungsgemäße elektrische Maschine mit den Merkmalen des Anspruchs 1 hat den Vorteil, dass mit der Verschaltung einer siebenphasigen Ständerwicklung gegenüber den bekannten Ausführungen eine bessere elektromagnetische Ausnützung erzielt wird, wodurch die Spannungs- und Drehmomentwelligkeit reduziert, die Leistungskennlinie angehoben und die magnetisch bedingten Geräusche, insbesondere im unteren Drehzahlbereich der Maschine weitgehend unterdrückt werden. Als weiterer Vorteil ist anzusehen, dass insbesondere bei leistungsstarken Wechselstrommaschinen durch die reduzierte Spannungs- und Drehmomentwelligkeit auch die mechanischen Belastungen der Maschine verringert werden. Dadurch, dass die Verbindungen zwischen den Phasensträngen zu einem Umrichter herausgeführt sind und dabei die Phasenstränge zweckmäßigerweise auf einem der beiden Wickelköpfe der Maschine derart miteinander verschaltet sind, dass von den Verbindungen zwischen den Phasensträngen nur jeweils ein Anschluss zu einer der sieben Gleichrichterbrücken geführt ist, ergibt sich ein geringerer Verschaltungsaufwand zum Umrichter.

Durch die in den Unteransprüchen aufgeführten Maßnahmen ergeben sich zweckmäßige Ausgestaltungen und Weiterbildungen der im Anspruch 1 angegebenen Merkmale.

Für eine möglichst einfache Herstellung und gleichmäßige Auslastung der Maschine ist es zweckmäßig, dass alle sieben Phasenstränge gleich groß sind, aus mindestens einer Spule bestehen und mit einem elektrischen Winkel α miteinander verschaltet sind, der zwischen 180°/7≈25,7° und 180°*4/7≈102,9° liegt. Bei vier- oder mehrpoligen Maschinen ist es ferner zweckmäßig, wenn zur Herstellung der Ständerwicklung die einzelnen Phasenstränge aus mehreren, vorzugsweise in Reihe geschalteten Spulen bestehen. Bei einem Ständerblechpaket mit gleich großer Zahnteilung am Umfang des Arbeitsluftspaltes der Maschine erhält man eine optimale Dämpfung der Magnetgeräusche, sowie der Spannungs- und Drehmomentwelligkeit, wenn die Phasenstränge in einem elektrischen Winkel α von 180°/7*3°≈77,3° miteinander verschaltet sind. Bei einer ungleichen Zahnteilung liegt das im Einzelnen zu ermittelnde Optimum des elektrischen Winkels α zwischen 60° und 100°. Dabei erzielt man eine besonders gute Dämpfung, wenn bei der Reihenschaltung der sieben Phasenstränge jeweils ein elektrisch folgender Phasenstrang übersprungen wird, wobei die Phasenstränge vorzugsweise in der Phasenfolge P1-P3-P5-P7-P2-P4-P6 in Reihe geschaltet sind. Gegebenenfalls können auch jeweils zwei elektrisch folgende Phasenstränge übersprungen werden.

Bei elektrischen Maschinen, deren Ständerwicklung mittels eines Wickeldrahtes herstellbar sind, ist es zweckmäßig, wenn die Spulen eines jeden Wicklungsstranges mit dem Wickeldraht durchgewickelt werden. Dabei kann es gegebenenfalls noch vorteilhaft sein, wenn auch die Wicklungsstränge zur Herstellung der Reihenschaltung in kostengünstiger Weise mit einem Wickeldraht durchgewickelt werden.

Im Hinblick auf die Anwendung der elektrischen Maschine als Wechselstromgenerator in einem 14V-Bordnetz in Kraftfahrzeugen ergibt sich eine besonders gute Geräuschdämpfung, wenn die Anzahl der Leiter der Phasenstränge beziehungsweise der Spulen in den Ständernuten größer als fünf und kleiner als zehn, vorzugsweise acht ist.

Des Weiteren hat sich im Hinblick auf die Geräuschdämpfung als zweckmäßig herausgestellt, wenn die Phasenstränge mit einem Nutfüllfaktor von größer 50 % in die Nuten des Ständerblechpaketes eingesetzt sind.

### Zeichnung

Weitere Einzelheiten der Erfindung werden im Folgenden beispielhaft anhand der Figuren näher erläutert. Es zeigen:
Figur 1 einen Längsschnitt durch einen Wechselstromgenerator für Kraftfahrzeuge mit einem Klauenpolrotor,
Figur 2 das Schaltbild eines Wechselstromgenerators mit erfindungsgemäßer Ständerwicklung und Gleichrichter-Baueinheit,
Figur 3 die Drehzahl-Geräusch-Kennlinien verschiedener Wechselstromgeneratoren und
Figur 4 die Drehzahl-Leistungskennlinien der Generatoren im Vergleich,
Figur 5 ein Wickelschema einer erfindungsgemäßen Ständer-Wellenwicklung,
Figur 6 ein weiteres Wickelschema mit einer Ständer-Schleifenwicklung und
Figur 7 einen Ausbruch eines Ständerblechpaketes der elektrischen Maschine nach Figur 2 mit erfindungsgemäßer Ständerwicklung.
Figur 8 zeigt eine weitere Verschaltungsvariante der siebenphasigen Ständerwicklung.

### Beschreibung der Ausführungsbeispiele

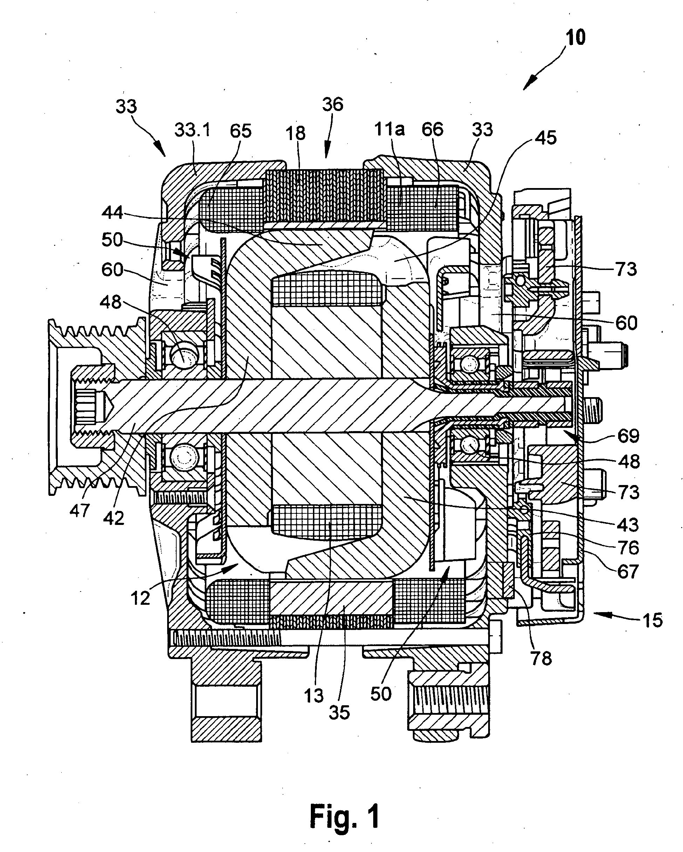

In Fig. 1 ist ein Schnitt durch eine elektrische Maschine in der Ausführung als Wechselstromgenerator 10 für Kraftfahrzeuge dargestellt. Dieser weist unter anderem ein zweiteiliges Gehäuse 33 auf, das aus einem ersten Lagerschild 33.1 und einem zweiten Lagerschild 33.2 besteht. Das Lagerschild 33.1 und das Lagerschild 33.2 nehmen in sich einen Ständer 36 auf, mit einem kreisringförmigen Blechpaket 18, in dessen nach innen offene und sich axial erstreckende Nuten 35 eine Ständerwicklung 11a eingelegt ist. Der ringförmige Ständer 36 umgibt mit seiner radial nach innen gerichteten Oberfläche einen elektromagnetisch erregten Läufer 12, der als Klauenpolläufer ausgebildet ist. Der Läufer 12 besteht unter anderem aus zwei Klauenpolplatinen 42 und 43, an deren Außenumfang sich jeweils in axialer Richtung erstreckende Klauenpolfinger 44 und 45 angeordnet sind. Beide Klauenpolplatinen 42 und 43 sind im Läufer 12 derart angeordnet, dass ihre sich in axialer Richtung erstreckenden Klauenpolfinger 44, 45 am Umfang des Rotors 12 einander als Nord-und Süd-Pole abwechseln. Es ergeben sich dadurch magnetisch erforderliche Klauenpolzwischenräume zwischen den gegensinnig magnetisierten Klauenpolfingern 44 und 45, welche wegen der sich zu ihrem freien Enden hin verjüngenden Klauenpolfinger 44 und 45 leicht schräg zur Maschinenachse verlaufen. Für die folgende Beschreibung der Erfindung ist dieser Verlauf vereinfacht als axial bezeichnet. Der Läufer 12 ist mittels einer Welle 47 und je einem auf je einer Seite befindlichen Wälzlager 48 in den jeweiligen Lagerschilden 33.1 beziehungsweise 33.2 drehbar gelagert. Er weist zwei axiale Stirnflächen auf, an denen jeweils ein Lüfter 50 befestigt ist. Diese Lüfter 50 bestehen im Wesentlichen aus einem plattenförmigen beziehungsweise scheibenförmigen Abschnitt, von dem Lüfterschaufeln in bekannter Weise ausgehen. Diese Lüfter 50 dienen dazu, über Öffnungen 60 in den Lagerschilden 33.1 und 33.2 einen Luftaustausch zwischen der Außenseite und dem Innenraum der elektrischen Maschine 10 zu ermöglichen. Dazu sind die Öffnungen 60 an den axialen Enden der Lagerschilde 33.1 und 33.2 vorgesehen, über die mittels der Lüfter 50 Kühlluft in den Innenraum der elektrischen Maschine 10 eingesaugt wird. Diese Kühlluft wird durch die Rotation der Lüfter 50 radial nach außen beschleunigt, so dass sie durch kühlluftdurchlässige Wickelköpfe 65 auf der Antriebsseite und 66 auf der Elektronikseite (Schleifring-, Bürsten- oder Gleichrichterseite) hindurchtreten kann. Durch diesen Effekt werden die Wickelköpfe gekühlt. Die Kühlluft nimmt nach dem Hindurchtreten durch die Wickelköpfe, beziehungsweise nach dem Umströmen dieser Wickelköpfe einen Weg radial nach außen durch nicht dargestellte Öffnungen zwischen angedeuteten Stegen. In Figur 1 auf der rechten Seite befindet sich eine Schutzkappe 67, die verschiedene Bauteile vor Umgebungseinflüssen schützt. So deckt diese Schutzkappe 67 beispielsweise eine Schleifringbaugruppe 69 ab, die eine Erregerwicklung 13 mit Erregerstrom versorgt. Um diese Schleifringbaugruppe 69 herum ist ein Kühlkörper 73 angeordnet, der hier als Pluskühlkörper wirkt. Als sogenannter Minuskühlköiper wirkt das Lagerschild 33.2. Zwischen dem Lagerschild 33.2 und dem Kühlkörper 73 ist eine Anschlussplatte 76 angeordnet, welche im Lagerschild 33.2 befestigte Minusdioden 78 und in dieser Darstellung nicht gezeigte Plusdioden eines Gleichrichters 15 im Kühlkörper 73 in Form einer Brückenschaltung miteinander verbindet.

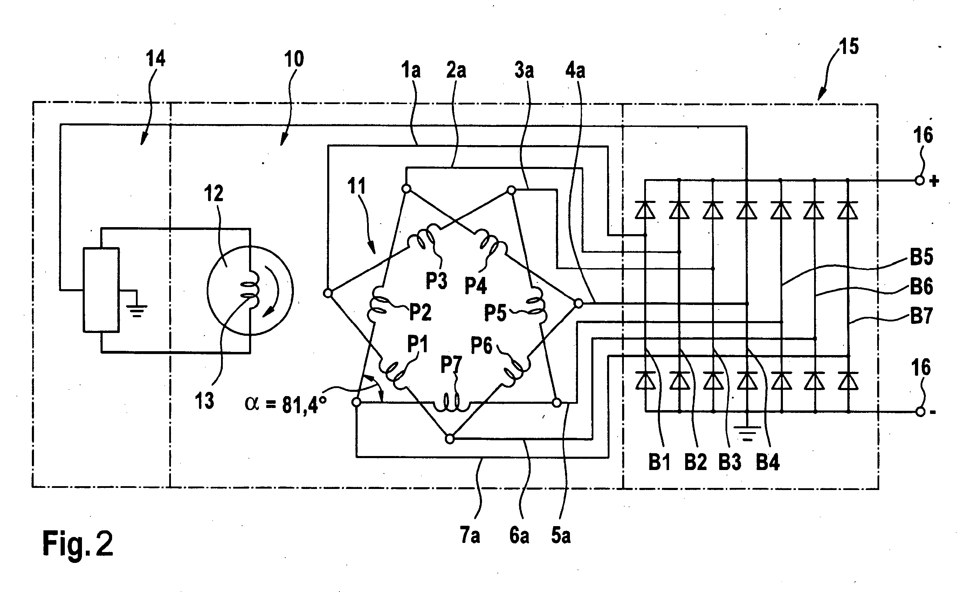

Figur 2 zeigt in schematischer Darstellung eine erfindungsgemäße elektrische Maschine in Form eines mit 10 bezeichneten Wechselstromgenerators zur Versorgung des Bordnetzes von Kraftfahrzeugen. Derartige Generatoren mit einer mehrphasigen Ständerwicklung 11 sind üblicherweise mit einem elektrisch erregten Klauenpolläufer 12 ausgerüstet, dessen Erregerwicklung 13 über einen Regler 14 vom Gleichstromausgang einer Gleichrichter-Baueinheit 15 versorgt wird und der gemeinsam mit dem Regler 14 am nicht dargestellten hinteren Lagerschild des Generators befestigt und mit diesem fest verschaltet ist. Je nach Anzahl und Verschaltung der Phasenstränge der Ständerwicklung 11 wird dabei im Betrieb des Generators am Ausgang der Gleichrichter-Baueinheit 15 eine mehr oder weniger wellige Gleichspannung an das nicht dargestellte Fahrzeug-Bordnetz abgegeben, in dem die Plus- und Minus-Anschlussklemmen 16 der Gleichrichter-Baueinheit 15 unmittelbar mit einer Akkumulatorbatterie des Fahrzeugs verbunden werden.

Durch die üblicherweise bei derartigen Maschinen verwendeten Lüfter werden mit zunehmender Drehzahl Lüftergeräusche induziert, denen je nach Art und Verschaltung der Ständerwicklung 11, die im Zusammenwirken mit dem Klauenpolläufer 12 von der Ständerwicklung verursachten Magnetgeräusche überlagert sind. Diese Magnetgeräusche treten insbesondere im unteren Drehzahlbereich auf, so dass sie als besonders störend empfunden werden.

Um die Magnetgeräusche der elektrischen Maschine möglichst stark zu dämpfen und deren Spannungs- und Drehmomentwelligkeit zu verringern, ist die Ständerwicklung 11 des Wechselstromgenerators 10 mit insgesamt sieben Phasensträngen P1 bis P7 versehen. Alle sieben Phasenstränge sind bezüglich ihrer Spulen- und Windungszahl gleich groß und miteinander mit dem gleichen elektrischen Winkel α verschaltet. Im Ausführungsbeispiel nach Figur 2 sind die Phasenstränge P1 bis P7 derart miteinander in Reihe geschaltet, dass bei der Reihenschaltung jeweils ein elektrisch nachfolgender Phasenstrang übersprungen wird. Dadurch ergibt sich gemäß Figur 2, dass die Phasenstränge P1 bis P7 in der Phasenfolge P1-P3-P5-P7-P2-P4-P6 in Reihe geschaltet sind. Auf diese Weise sind alle Phasenstränge P1 bis P7 in einem elektrischen Winkel α von 180/7*3° ≈ 77,1° miteinander verschaltet. Bei Generatoren mit unterschiedlich großer Zahnteilung ihres Ständerblechpaketes können folglich die sieben Phasenstränge auch nicht mit gleichem elektrischen Winkel α miteinander verschaltet werden. Um auch hier eine gute Dämpfung der Magnetgeräusche und der Welligkeit zu erzielen, ist es erforderlich, die Phasenstränge P1 bis P7 mit der vorgenannten Phasenfolge in einem elektrischen Winkel α miteinander zu verschalten, der im Bereich zwischen 60°° und 100° liegt.

Es ist somit eine elektrische Maschine, insbesondere Wechselstromgenerator für ein Kraftfahrzeug mit einem Läufer 12 und sich in axialer Richtung erstreckenden Klauenpolfingern 44, 45 vorgesehen, die sich am Umfang des Läufers 12 als Nord-und Süd-Pole abwechseln, einem Ständer 36, der einen Ständerkern 18 mit einer in Nuten 35 des Ständerkerns 18 angeordneten Ständerwicklung 11 aufweist, wobei der Ständer 36 dem Läufer 12 gegenübersteht, wobei der Ständer 36 und der Läufer 12 von zwei Lagerschilden 33 unterstützt ist, mit einer ringspulenförmigen Erregerwicklung 13, die am Läufer 12 befestigt ist, wobei die Ständerwicklung 11 sieben Wicklungsstränge P1, P2, P3, P4, P5, P6, P7 aufweist, die mit einem zumindest in etwa gleichen elektrischen Winkel α miteinander in Reihe geschaltet sind, wobei bei der Reihenschaltung der Phasenstränge P1, P2, P3, P4, P5, P6, P7 jeweils mindestens ein benachbarter Phasenstrang P1, P2, P3, P4, P5, P6, P7 übersprungen ist. Die Verschaltung bzw. Reihenschaltung der Phasenstränge P1, P2, P3, P4, P5, P6, P7 ist dabei derart, dass sich der elektrisch wirksame Wicklungszug der Ständerwicklung 11 und somit der sieben Phasenstränge P1, P2, P3, P4, P5, P6, P7 nach zwei Umläufen schließt.

Es ist des Weiteren ein Wechselstromgenerator 10 vorgesehen, wonach die Ständerwicklung 11 Wickelköpfe 65, 66 aufweist, die durch je einen näherungsweise radialen Kühlluftstrom kühlbar sind, der von zumindest an einem axialen Ende einer Klauenpolplatine 42, 43 angebrachten Lüfter 50 verursacht wird.

Aus Figur 2 ist ferner erkennbar, dass die Verbindungen zwischen den Phasensträngen P1 bis P7 jeweils zu einer von sieben Gleichrichterbrücken B1 bis B7 der Gleichrichter-Baueinheit 15 herausgeführt sind. Die Gleichrichterbrücken B1 bis B7 sind dabei in an sich bekannter Weise mittels jeweils zwei Dioden zu einer Zweiweg-Gleichrichter-Baueinheit 15 verschaltet. Die Verschaltung der Phasenstränge P1 bis P7 erfolgt dabei zweckmäßigerweise am hinteren Wickelkopf der Maschine, in dessen Bereich in bekannter Weise auch die Gleichrichter-Baueinheit 15 angeordnet ist. Dabei ist vorgesehen, dass von den Verbindungen zwischen den Phasensträngen P1 bis P7 jeweils nur ein Anschluss 1a bis 7a zu einer der sieben Gleichrichterbrücken B1 bis B7 geführt ist.

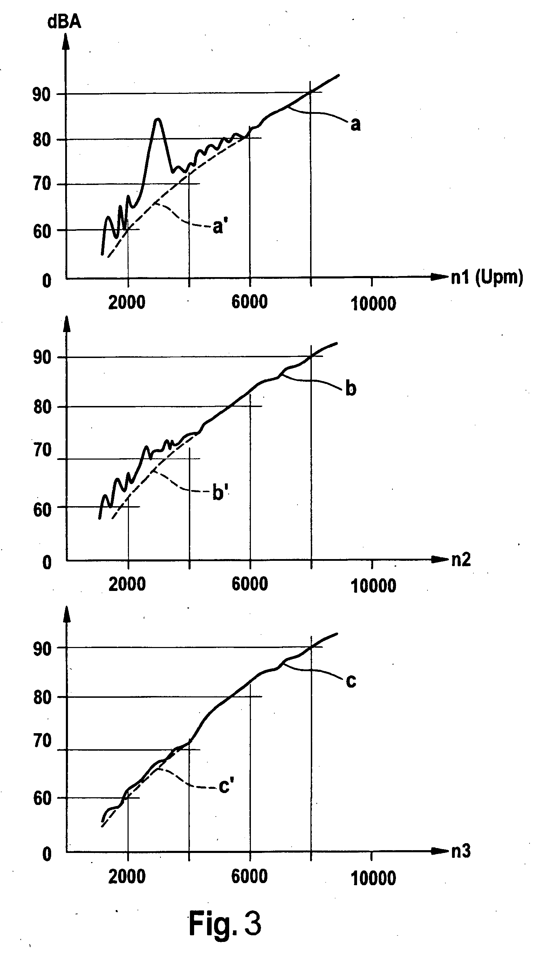

In Figur 3 wird die vom Wechselstromgenerator nach Figur 2 abgegebene drehzahlabhängige Geräuschkennlinie mit den Geräuschkennlinien bekannter Wechselstromgeneratoren gleicher Baugröße verglichen. Dabei ist auf der oberen Achse n1 die Geräuschkennlinie a eines Wechselstromgenerators mit bekannter dreiphasiger Ständerwicklung dargestellt. Sie zeigt im unteren Drehzahlbereich zwischen 1500 und 4000 Upm eine deutlich verstärkte Geräuschbildung, die auf Magnetgeräusche des Generators beruhen und die dem Lüftergeräusch überlagert sind. Durch Abschaltung der Läufererregung des Generators erhält man die allein vom Lüfter der Maschine verursachten Geräusche gemäß der gestrichelten Kennlinie a'. Auf der mittleren Achse n2 ist der drehzahlabhängige Schallpegel eines Wechselstromgenerators mit einer bekannten siebenphasigen, zu einem Heptagon verschalteten Ständerwicklung als Kennlinie b dargestellt. Auch hier ist im unteren Drehzahlbereich zwischen 1500 und 4000 Upm gegenüber dem reinen Lüftergeräusch gemäß der Kennlinie b' ein gegenüber der Kennlinie a verringerter, aber noch immer erhöhter Schallpegel erkennbar, der ebenfalls noch störend wahrgenommen wird. Erst bei einem Wechselstromgenerator mit einer siebenphasigen nach Figur 2 erfindungsgemäß verschalteten Ständerwicklung wird gemäß der Kennlinie c auf der Achse n3 der magnetisch bedingte Geräuschpegel nunmehr auch im unteren Drehzahlbereich soweit bedämpft, dass dies gegenüber dem Lüftergeräusch gemäß der Kennlinie c' akustisch praktisch nicht mehr wahrnehmbar ist.

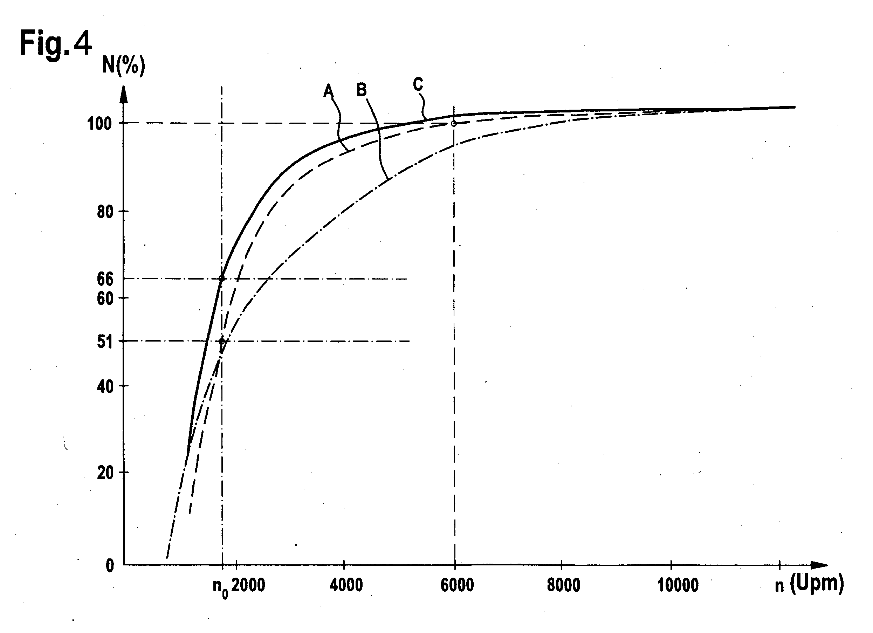

In Figur 4 sind die Leistungskennlinien der Generatoren in einem Diagramm über die Drehzahl dargestellt. Die gestrichelte Kennlinie A zeigt den Verlauf der abgegebenen Leistung eines Wechselstromgenerators mit bekannter dreiphasiger Ständerwicklung, deren Nennleistung mit 100% bewertet ist und die bei einer Drehzahl n von 6000 Upm erreicht wird. Die strichpunktierte Kennlinie B zeigt die abgegebene Leistung eines Generators, dessen Ständerwicklung in bekannter Weise aus sieben zu einem Heptagon verschalteten Phasen besteht. Die voll ausgezogene Kennlinie C zeigt die drehzahlabhängig abgegebene Leistung eines erfindungsgemäßen Generators mit siebenphasiger Ständerwicklung, die gemäß Figur 2 verschaltet ist.

Im Vergleich dieser Kennlinien ist erkennbar, dass der erfindungsgemäß ausgebildete Generator gemäß seiner Kennlinie C bereits bei etwa 5000 Upm seine Nennleistung erreicht und insbesondere im unteren Drehzahlbereich deutlich mehr Leistung abzugeben vermag als die bekannten Ausführungen gemäß Kennlinie A und B. Bei einer Leerlaufdrehzahl nₒ von 1800 Upm konnte damit die Leistung von etwa 51% gemäß Kennlinien A und B auf 66%nach Kennlinie C angehoben werden.

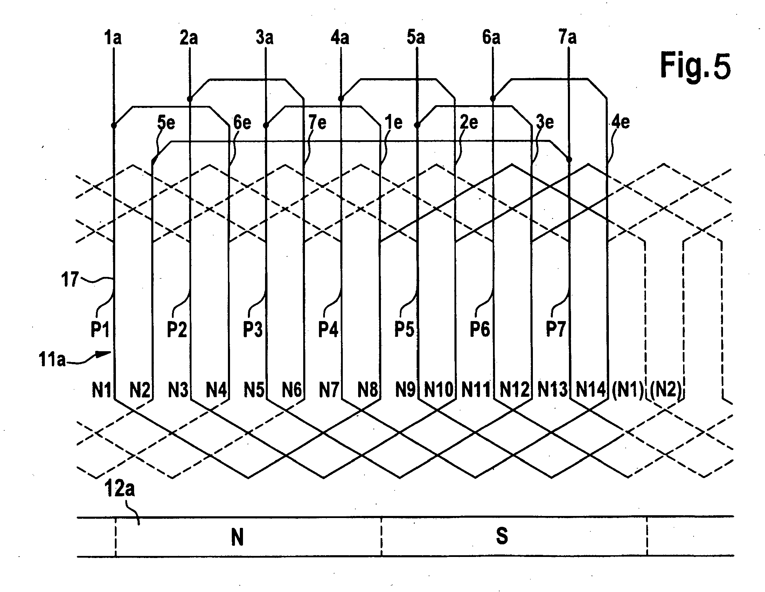

Figur 5 zeigt in schematischer Weise ein Wickelschema einer siebenphasigen Ständerwicklung 11a, wobei die sieben Phasenstränge P1 bis P7 in Form einer Wellenwicklung in die Nuten eines nicht dargestellten Ständerblechpaketes eingesetzt sind. Im vorliegenden Beispielsfall hat die Maschine einen zweipoligen Läufer 12a. Auf der rechten Seite der Figur 4 ist gestrichelt angedeutet, dass jeder Phasenstrang P1 bis P7 in mehreren Wellen in die Nuten N1 bis N14 eingefügt wird, so dass sich für jeden Phasenstrang P1 bis P7 jeweils eine aus mehreren Windungen bestehende Spule ergibt. Die Anfänge der Phasenstränge P1 bis P7 sind dort mit 1a bis 7a und die Enden mit 1e bis 7e bezeichnet. Der Wickelschritt dieser Wellenwicklung 11a beträgt sieben Nuten. Die Enden 1e bis 7e der Wicklungsstränge P1 bis P7 bilden hier jeweils die Verbindungen zu dem Spulenanfang des nachfolgend dazu in Reihe geschalteten Phasenstranges. Da auch hier bei der Reihenschaltung der Phasenstränge P1 bis P7 der jeweils elektrisch folgende Spulenstrang zur Erzielung einer optimalen Bedämpfung des Magnetgeräusches und der Welligkeit übersprungen wird, erfolgt auch hier die Reihenschaltung der Spulenstränge in gleicher Weise wie im Ausführungsbeispiel nach Figur 2. Das Ende 1e des ersten Wicklungsstranges P1 wird mit dem Wicklungsanfang 3a des Phasenstranges P3 verschaltet, dessen Ende 3e wird mit dem Anfang 5a des Phasenstranges P5 verschaltet, dessen Ende 5e wird mit dem Anfang 7a des Phasenstranges P7 verschaltet, dessen Ende 7e wird mit dem Anfang 2a des Phasenstranges P2 verschaltet, dessen Ende 2e wird mit dem Anfang 4a des Phasenstranges P4 verschaltet, dessen Ende 4e wird mit dem Anfang 6a des Phasenstranges P6 verschaltet und dessen Ende 6e wird schließlich mit dem Anfang 1a des ersten Phasenstranges P1 verschaltet. Alle sieben Verbindungen liegen auf ein und derselben Seite am hinteren Wickelkopf der Ständerwicklung 11a, wobei die Anfänge 1a bis 7a der Phasenstränge P1 bis P7 zum Anschluss einer Gleichrichter-Baueinheit 15 mit sieben Gleichrichterbrücken gemäß Figur 2 aus der Maschine herausgeführt sind.

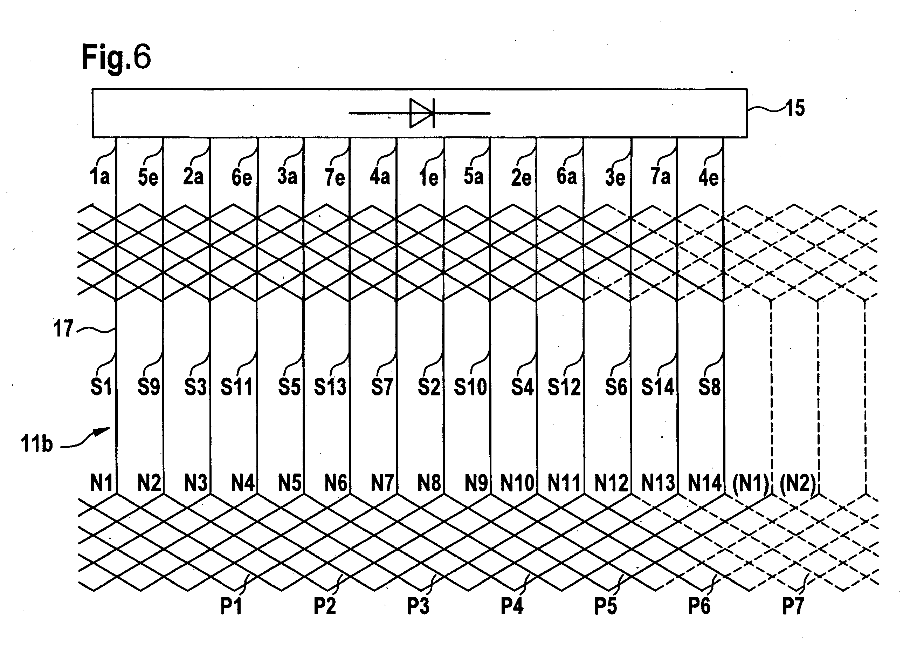

In Figur 6 ist als weiteres Ausführungsbeispiel das Wickelschema einer siebenphasigen Ständerwicklung in Form einer Schleifenwicklung dargestellt, die für einen zweipoligen Läufer gemäß Figur 5 ebenfalls in 14 Nuten N1 bis N14 eines Ständerblechpaketes eingesetzt ist. Die Phasenstränge P1 bis P7 werden hier jeweils aus zwei in Reihe geschaltete Spulen S1 bis S14 mit einem Wickelschritt von sieben Nuten gebildet. So wird zum Beispiel für den Spulenstrang P1 die erste Spule S1 mit beispielsweise vier Windungen in die Nuten N1 und N8 gelegt, wobei der Spulenanfang 1a zum Anschluss einer Gleichrichter-Baueinheit 15 am hinteren Wickelkopf herausgeführt ist. Danach wird ohne Unterbrechung die zweite Spule S2 mit je vier Windungen in die Nuten N8 und N1 gelegt und deren Ende 1e ebenfalls zur Gleichrichter-Baueinheit 15 herausgeführt. In gleicher Weise werden sodann die Spulen S3 und S4 des zweiten Phasenstranges P2 mit jeweils vier Windungen in die Ständernuten eingesetzt, wobei die Spule S3 in die Nuten N3 und N10 sowie die Spule S4 in die Nuten N10 und N3 angeordnet werden. Auch hier werden der Anfang 2a des Spulenstranges P2 und dessen Ende 2e am hinteren Wickelkopf zur Gleichrichter-Baueinheit 15 herausgeführt. Dies wiederholt sich nun in gleicher Weise für die jeweils folgenden Phasenstränge P3 bis P7. Die Verschaltung der sieben Phasenstränge in der Phasenfolge gemäß Figur 2 erfolgt hier durch entsprechende, nicht dargestellte Leiterbrücken innerhalb der Gleichrichter-Baueinheit 15. In vorteilhafter Weise werden hierbei die beiden in Reihe geschalteten Spulen S eines jeden Wicklungsstranges P mit einem Wickeldraht 17 durchgewickelt. Desgleichen können auch sämtliche sieben Phasenstränge P zur Erzielung der gewünschten Reihenschaltung mit einem Wickeldraht 17 durchgewickelt werden, wobei dann gemäß Figur 4 die Enden 1 bis 7e der Wicklungsstränge P1 bis P7 als Verbindungen zu dem jeweiligen Anfang 3a bis 2a des übernächsten Phasenstranges P auf den gleichrichterseitigen Wickelkopf der Maschine verlegt werden.

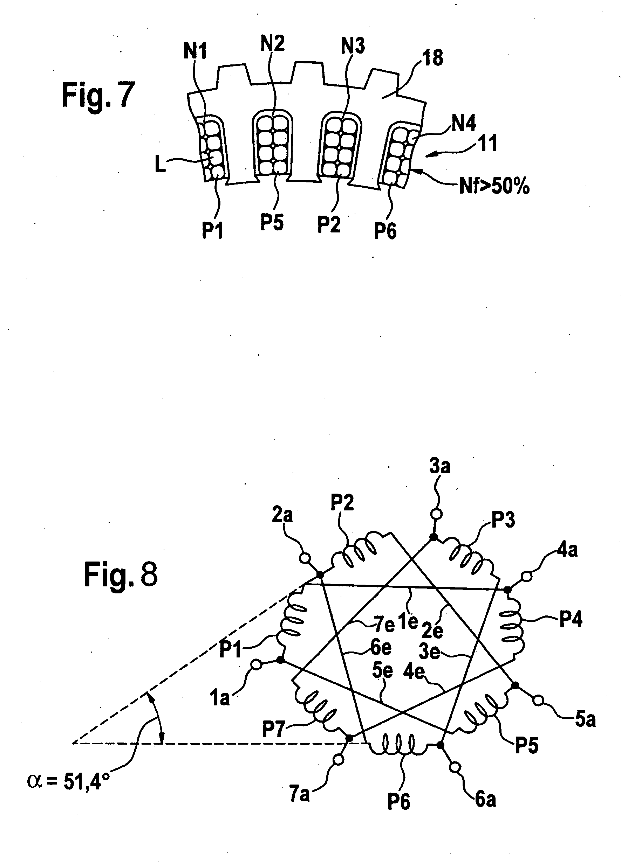

Figur 7 zeigt einen Ausbruch eines Ständerblechpaketes 18 des Wechselstromgenerators 10 aus Figur 2 mit der siebenphasigen Ständerwicklung 11. Dabei sind die Phasenstränge P1, P5, P2, P6 jeweils in benachbarte Nuten N1, N2, N3, N4 mit jeweils acht Leitern L untergebracht. Dabei können die Phasenstränge P jeweils gemäß Figur 6 aus zwei in Reihe geschaltete Spulen mit je vier Leitern L hergestellt sein oder gemäß Figur 5 aus jeweils einer Wellenwicklung mit acht Wellen. Des Weiteren hat sich zur Bedämpfung der Magnetgeräusche als vorteilhaft herausgestellt, wenn die Phasenstränge P mit einem Nutenfüllfaktor Nf von größer 50 % in die Nuten N des Ständerblechpaketes 18 eingesetzt sind, wie dies bei der Ausführung nach Figur 7 erkennbar ist.

Figur 8 zeigt eine weitere Verschaltungsmöglichkeit der siebenphasigen Ständerwicklung 11 in dem bei der Reihenschaltung der einzelnen Phasenstränge P1 bis P7 jeweils zwei folgende Phasenstränge P übersprungen werden. Auf diese Weise sind die Phasenstränge P in der Phasenfolge P1-P4-P7-P3-P6-P2-P5 über die Verbindungen le bis 7e in Reihe geschaltet. Auch hier sind die Anfänge 1a bis 7a der Spulenstränge P1 bis P7 zum Anschluss einer Gleichrichter-Baueinheit 15 gemäß Figur 2 stirnseitig herausgeführt. Bei dieser Schaltungsausführung sind die Phasenstränge P1 bis P7 mit einem elektrischen Winkel α von 180/7° ≈ 25,7° zueinander in Reihe geschaltet. Diese Variante ist ggf. gegenüber der Ausführung nach Figur 2 weniger geräusch- und leistungsoptimiert.

Aufgrund der verschiedenen Schaltungsmöglichkeiten für die Reihenschaltung der siebensträngigen Ständerwicklung 11 sowie aufgrund unterschiedlicher Zahnteilungen ergibt sich folglich für die in Reihe liegenden Phasenstränge P jeweils ein elektrischer Winkel α im Bereich zwischen 50° und 90°.

Die Erfindung ist nicht auf die dargestellten und beschriebenen Ausführungsbeispiele gemäß Figur 1 bis 8 beschränkt. So kann es durchaus zweckmäßig sein, bei einer Anwendung der Erfindung an Wechselstromgeneratoren für Kraftfahrzeuge mit einer Bordnetzspannung von 14V die Leiterzahl Z in den Nuten N des Ständerblechpaketes 18 größer als 5 und kleiner als 10 zu wählen, sofern dies für die Optimierung der Maschinenleistung geboten ist. Eine bevorzugte Anwendung der Erfindung ergibt sich bei Wechselstromgeneratoren für Kraftfahrzeuge mit vier- bis achtzehnpoligen Klauenpolläufern und einem reglergesteuerten Erregerstrom. Anstelle eines mit einem Wickeldraht durchgewickelten Phasenstranges der Ständerwicklung kann es bei leistungsstarken elektrischen Maschinen gegebenenfalls zweckmäßiger sein, vorgefertigte Leiterstäbe in die Nuten des Ständerblechpaketes einzusetzen und diese am Wickelkopf in bekannter Technik miteinander zu verschalten. Außerdem können die einzelnen Spulen der Phasenstränge P sowohl miteinander in Reihe als auch zueinander parallel geschaltet werden. Anstelle eines dicken Wickeldrahtes können auch zwei oder mehrere parallele Wickeldrähte zu Phasensträngen durchgewickelt werden.

## Patentansprüche

1. Elektrische Maschine, insbesondere Wechselstromgenerator für ein Kraftfahrzeug mit einem Läufer (12) und sich in axialer Richtung erstreckenden Klauenpolfinger (44, 45), die sich am Umfang des Läufers (12) als Nord-und Süd-Pole abwechseln, einem Ständer (36), der einen Ständerkem (18) mit einer in Nuten (35) des Ständerkerns (18) angeordneten Ständerwicklung (11) aufweist, wobei der Ständer (36) dem Läufer (12) gegenübersteht, wobei der Ständer (36) und der Läufer (12) von zwei Lagerschilden (33) unterstützt ist, mit einer ringspulenförmigen Erregerwicklung (13), die am Läufer (12) befestigt ist, wobei die Ständerwicklung (11) sieben Wicklungsstränge (P1, P2, P3, P4, P5, P6, P7) aufweist, die mit einem zumindest in etwa gleichen elektrischen Winkel α miteinander in Reihe geschaltet sind, wobei bei der Reihenschaltung der Phasenstränge (P1, P2, P3, P4, P5, P6, P7) jeweils mindestens ein benachbarter Phasenstrang (P1, P2, P3, P4, P5, P6, P7) übersprungen ist, wobei Verbindungen (1e bis 7e) zwischen den Phasensträngen (P1 bis P7) zu einem Umrichter herausgeführt sind, **dadurch gekennzeichnet, dass** die Phasenstränge (P1 bis P7) auf einem der beiden Wickelköpfe der Maschine (10) derart miteinander verschaltet sind, dass von den Verbindungen (1e bis 7e) zwischen den Phasensträngen (P1 bis P7) nur jeweils eine elektrische Verbindung zu einer der sieben Gleichrichterbrücken (B1 bis B7) geführt ist.

2. Elektrische Maschine nach Anspruch 1, **dadurch gekennzeichnet, dass** die Ständerwicklung (11) Wickelköpfe (65, 66) aufweist, die durch je einen näherungsweise radialen Kühlluftstrom kühlbar sind, der von zumindest an einem axialen Ende einer Klauenpolplatine (42, 43) angebrachten Lüfter (50) verursacht wird.

3. Elektrische Maschine nach einem der vorhergehenden Ansprüche , **dadurch gekennzeichnet, dass** alle sieben Phasenstränge (P1, P2, P3, P4, P5, P6, P7) gleich groß sind, aus mindestens einer Spule, insbesondere aus mehreren Spulen (S 1 bis S14) bestehen und mit einem elektrischen Winkel α miteinander verschaltet sind, der zwischen 60° und 100° liegt.

4. Elektrische Maschine nach Anspruch 3, **dadurch gekennzeichnet, dass** die Phasenstränge (P1, P2, P3, P4, P5, P6, P7) mit einem elektrischen Winkel α zwischen 70° bis 90°, vorzugsweise mit einem elektrischen Winkel α von 180°/7*3 ≈ 77,1° miteinander verschaltet sind.

5. Elektrische Maschine nach einem der vorherigen Ansprüche, **dadurch gekennzeichnet, dass** die Phasenstränge (P1, P2, P3, P4, P5, P6, P7) in einer Phasenfolge (P1-P3-P5-P7-P2-P4-P6) in Reihe geschaltet sind, in der jeweils nur ein Phasenstrang (P) übersprungen wird.

6. Elektrische Maschine nach einem der vorherigen Ansprüche, **dadurch gekennzeichnet, dass** eine Verschaltung bzw. Reihenschaltung der Phasenstränge (P1, P2, P3, P4, P5, P6, P7) derart ist, dass sich der elektrisch wirksame Wicklungszug der Ständerwicklung (11) und somit der sieben Phasenstränge (P1, P2, P3, P4, P5, P6, P7) nach zwei Umläufen schließt.

7. Elektrische Maschine, insbesondere Wechselstromgenerator für Kraftfahrzeuge nach einem der vorherigen Ansprüche, **dadurch gekennzeichnet, dass** der Umrichter eine Gleichrichter-Baueinheit (15) mit sieben Gleichrichterbrücken (B1 bis B7) ist.

8. Elektrische Maschine nach einem der Ansprüche 5 bis 7, **dadurch gekennzeichnet, dass** die Spulen (S1 bis S14) eines jeden Wicklungsstranges (P1 bis P7) und vorzugsweise auch alle Wicklungsstränge (P1 bis P7) mit jeweils mindestens einem Wickeldraht (17) durchgewickelt sind.

9. Elektrische Maschine nach einem der Ansprüche 5 bis 7, **dadurch gekennzeichnet, dass** die Anzahl der Leiter (L) je Phasenstrang (P1 bis P7) beziehungsweise je Spule (S1 bis S14) in den Ständernuten (N1 bis N14) größer als 5 und kleiner als 10, vorzugsweise 8 ist.

10. Elektrische Maschine nach einem der vorherigen Ansprüche, **dadurch gekennzeichnet, dass** die Phasenstränge (P1 bis P7) mit einem Nutenfüllfaktor (Nf) von größer 50% in Nuten (N1 bis N14) eines Ständerblechpaketes (18) der Maschine eingesetzt sind.

## Claims

1. Electrical machine, in particular AC generator for a motor vehicle, having a rotor (12) and claw pole fingers (44, 45) which extend in the axial direction and alternate over the circumference of the rotor (12) as north and south poles, having a stator (36) which has a stator core (18) having a stator winding (11) which is arranged in slots (35) in the stator core (18), wherein the stator (36) is situated opposite the rotor (12), wherein the stator (36) and the rotor (12) are supported by two end plates (33), having an annular-coil-like field winding (13) which is attached to the rotor (12), wherein the stator winding (11) has seven winding sections (P1, P2, P3, P4, P5, P6, P7) which are connected to one another in series at an at least approximately identical electrical angle α, wherein, in the case of the series connection of the phase sections (P1, P2, P3, P4, P5, P6, P7), in each case at least one adjacent phase section (P1, P2, P3, P4, P5, P6, P7) is skipped, wherein connections (1e to 7e) between the phase sections (P1 to P7) are routed out to a converter, **characterized in that** the phase sections (P1 to P7) are interconnected on one of the two winding heads of the machine (10) in such a way that only in each case one electrical connection from amongst the connections (1e to 7e) between the phase sections (P1 to P7) is routed to one of the seven rectifier bridges (B1 to B7).

2. Electrical machine according to Claim 1, **characterized in that** the stator winding (11) has winding heads (65, 66) which can be cooled by in each case one approximately radial cooling air flow which is caused by fans (50) which are mounted at least at an axial end of a claw pole board (42, 43).

3. Electrical machine according to either of the preceding claims, **characterized in that** all seven phase sections (P1, P2, P3, P4, P5, P6, P7) are of identical size, comprise at least one coil, in particular a plurality of coils (S1 to S14), and are interconnected at an electrical angle α which lies between 60° and 100°.

4. Electrical machine according to Claim 3, **characterized in that** the phase sections (P1, P2, P3, P4, P5, P6, P7) are interconnected at an electrical angle α of between 70° and 90°, preferably at an electrical angle α of 180°/7*3 ≈ 77.1°.

5. Electrical machine according to one of the preceding claims, **characterized in that** the phase sections (P1, P2, P3, P4, P5, P6, P7) are connected in series in a phase sequence (P1-P3-P5-P7-P2-P4-P6) in which in each case only one phase section (P) is skipped.

6. Electrical machine according to one of the preceding claims, **characterized in that** an interconnection or series connection of the phase sections (P1, P2, P3, P4, P5, P6, P7) is such that the electrically active winding path of the stator winding (11) and therefore of the seven phase sections (P1, P2, P3, P4, P5, P6, P7) finishes after two revolutions.

7. Electrical machine, in particular AC generator for motor vehicles, according to one of the preceding claims, **characterized in that** the converter is a rectifier unit (15) having seven rectifier bridges (B1 to B7).

8. Electrical machine according to one of Claims 5 to 7, **characterized in that** in each case at least one winding wire (17) is wound through the coils (S1 to S14) of each winding section (P1 to P7) and preferably also through all winding sections (P1 to P7).

9. Electrical machine according to one of Claims 5 to 7, **characterized in that** the number of conductors (L) for each phase section (P1 to P7) or for each coil (S1 to S14) in the stator slots (N1 to N14) is greater than 5 and less than 10, preferably 8.

10. Electrical machine according to one of the preceding claims, **characterized in that** the phase sections (P1 to P7) are inserted into slots (N1 to N14) of a laminated stator core (18) of the machine with a slot filling factor (Nf) of greater than 50%.

## Revendications

1. Machine électrique, notamment générateur à courant alternatif pour un véhicule automobile, avec un rotor (12) et des doigts de pôle à griffes (44, 45) s'étendant dans la direction axiale et alternant sur la périphérie du rotor (12) sous la forme de pôles nord et sud, avec un stator (36) comportant un noyau de stator (18) avec un enroulement de stator (11) disposé dans les rainures (35) du noyau de stator (18), le stator (36) étant placé en face du rotor (12), le stator (36) et le rotor (12) étant maintenus par deux panneaux de support (33), avec un enroulement d'excitateur (13) en forme de bobine annulaire fixé au rotor (12), l'enroulement de stator (11) comportant sept chaînes d'enroulement (P1, P2, P3, P4, P5, P6, P7) reliées entre elles en série suivant au moins un angle α électrique approximativement égal, au moins une chaîne de phase (P1, P2, P3, P4, P5, P6, P7) connexe étant respectivement sautée lors de la connexion des chaînes de phase (P1, P2, P3, P4, P5, P6, P7), les jonctions (1e à 7e) placées entre les chaînes de phase (P1 à P7) sortant en direction d'un convertisseur, **caractérisée en ce que** les chaînes de phase (P1 à P7) sont connectées entre elles sur une des deux têtes d'enroulement de la machine (10) de telle sorte que seule respectivement une jonction électrique conduisant à un des sept ponts de redresseur (B1 à B7) est guidée par les jonctions (1e à 7e) prévues entre les chaînes de phase (P1 à P7).

2. Machine électrique selon la revendication 1, **caractérisée en ce que** l'enroulement de stator (11) comporte des têtes d'enroulement (65, 66) pouvant être refroidies par respectivement un courant d'air de refroidissement approximativement radial provoqué par un ventilateur (50) au moins placé à une extrémité axiale d'une platine de pôle à griffes (42, 43).

3. Machine électrique selon l'une quelconque des revendications précédentes, **caractérisée en ce que** les sept chaînes de phase (P1, P2, P3, P4, P5, P6, P7) sont toutes de la même taille, sont composées d'au moins une bobine, notamment de plusieurs bobines (S1 à S14) et sont connectées entre elles selon un angle électrique α compris entre 60° et 100°.

4. Machine électrique selon la revendication 3, **caractérisée en ce que** les chaînes de phase (P1, P2, P3, P4, P5, P6, P7) sont connectées entre elles selon un angle électrique α compris entre 70° à 90°, de préférence selon un angle électrique α de 180°/7*3 ≈ 77,1°.

5. Machine électrique selon l'une quelconque des revendications précédentes, **caractérisée en ce que** les chaînes de phase (P1, P2, P3, P4, P5, P6, P7) sont connectées selon un ordre de phases (P1-P3-P5-P7-P2-P4-P6) dans lequel respectivement seule une chaîne de phase (P) est sautée.

6. Machine électrique selon l'une quelconque des revendications précédentes, **caractérisée en ce qu'**une connexion en série des chaînes de phase (P1, P2, P3, P4, P5, P6, P7) est réalisée de telle sorte que le train d'enroulement actif sur le plan électrique de l'enroulement de stator (11) et ainsi les sept chaînes de phase (P1, P2, P3, P4, P5, P6, P7) se ferment après deux tours.

7. Machine électrique, notamment générateur de courant alternatif pour véhicules automobiles selon l'une quelconque des revendications précédentes, **caractérisée en ce que** le convertisseur est une unité de redresseur (15) dotée de sept ponts de redresseur (B1 à B7).

8. Machine électrique selon l'une quelconque des revendications 5 à 7, **caractérisée en ce que** les bobines (S1 à S14) de chaque chaîne d'enroulement (P1 à P7) et de préférence de toutes les chaînes d'enroulement (P1 à P7) sont traversées par respectivement au moins un fil d'enroulement (17).

9. Machine électrique selon l'une quelconque des revendications 5 à 7, **caractérisée en ce que** le nombre de conducteurs (L) de la chaîne de phase (P1 à P7) respective et/ou de la bobine (S1 à S14) respective se trouvant dans les rainures de stator (N1 à N14) est supérieur à 5 et inférieur à 10, de préférence égal à 8.

10. Machine électrique selon l'une quelconque des revendications précédentes, **caractérisée en ce que** les chaînes de phase (P1 à P7) sont utilisées avec un facteur de remplissage de rainure (Nf) de plus de 50 % dans les rainures (N1 à N14), par rapport à un bloc feuilleté de stator (18) de la machine.
